# NEW EUROPEAN PATENT SPECIFICATION

(11) **EP 0 608 801 B2**
(45) Date of publication and mention of the opposition decision: **16.01.2002**
(45) Mention of the grant of the patent: 14.10.1998
(21) Application number: 94100955.7
(22) Date of filing: 24.01.1994
(51) Int. Cl.: B65D 65/46, B32B 27/08, B32B 7/06

(54) **Composite film bags for packaging**
Verbundfolienbeutel für Verpackungszwecke
Sacs en feuille composite destinés à l'emballage

(30) Priority: 25.01.1993 JP 2854893
(43) Date of publication of application: 03.08.1994
(73) Proprietor: AICELLO CHEMICAL COMPANY LIMITED, Toyohashi-shi, Aichi-ken 441-11 (JP)
(72) Inventor: Tsukamoto, Yoshinori, Toyahashi-shi, Aichi 440 (JP); Shimizu, Michio, Toyohashi-shi, Aichi 440 (JP)
(74) Representative: Pellmann, Hans-Bernd, Dipl.-Ing.

(56) References cited:
- EP-A- 0 011 502
- EP-A- 0 190 776
- EP-A- 0 513 692
- EP-A- 0 518 689
- EP-A- 0 520 280
- FR-A- 1 600 060
- GB-A- 922 317
- GB-A- 1 054 808
- GB-A- 2 193 925
- GB-A- 2 244 258
- JP-A- 2 163 149
- JP-A- 4 057 989
- JP-A- 54 097 193
- US-A- 4 681 228
- US-A- 4 844 828
- US-A- 5 015 513
- US-A- 5 080 226

## Description

The present invention relates to a composite film bag.

From the document EP-A-0 011 502 a generic composite film bag is known. The water-insoluble bag material thereof can be coated with a water-soluble polyvinyl alcohol film.

Agricultural chemicals are distributed in a variety of forms depending on the physical conditions thereof. Powdery agricultural chemicals are in general packed in a packaging material such as a laminate film comprising, for instance, an aluminum vapor-deposited polyester film and a polyethylene film, or paper, an aluminum foil and a polyethylene film, in order to prevent any quality deterioration through moisture uptake. In general, the agricultural chemicals withdrawn from their package are weighed, dissolved in water and sprayed on various fields. If operations for weighing the agricultural chemicals and for introducing it into a dissolution tank are performed in situ, the agricultural chemicals may be blown up by the wind, adhered to the circumference of the tank and the operator's body and/or the operator may inhale the powdery chemicals.

Moreover, a packaging material contaminated with agricultural chemicals may become a cause of secondary environmental pollution and, therefore, should be disposed of with the greatest circumspection.

To eliminate such inconvenience, a dose of powdery agricultural chemical agents is packed in a water soluble polyvinyl alcohol film and then the polyvinyl alcohol package is further wrapped up in a laminate film such as those listed above. Upon practical use of the packed agricultural chemical agents, the internal package of polyvinyl alcohol is withdrawn from the outermost wrapping and introduced into water contained in a tank without removing the polyvinyl alcohol film to thus dissolve the polyvinyl alcohol film and hence the content thereof (i.e., the agricultural chemical agents) in water. This allows the prevention of any contamination of the outer packaging material with powdery agricultural chemicals and any scattering of the powdery agricultural chemicals in the wind. Thus, agricultural chemicals can be handled with high safety and hygiene.

Most of agricultural chemicals are used during spring and summer seasons and correspondingly, the packaged agricultural chemicals are transported during winter season in the majority of cases. Polyvinyl alcohol films used as materials for packaging powdery agricultural chemicals have glass transition temperatures of approximately 0 °C and therefore, if they are exposed to a substantially low temperature during transportation by land or air in winter, pinholes and/or cracks are formed on the polyvinyl alcohol film serving as the packaging material due to vibration of trucks or air planes during transportation. This leads to leakage of the content of the film, i.e., the powdery agricultural chemicals, hence contamination of the interior of an outer wrapping film and, in some cases, discrepancy or reduction in the dosage of the agricultural chemicals packed in the polyvinyl alcohol film.

It is the object of the invention to improve the practical use of a composite film bag.

Moreover, a composite film bag for packaging shall be provided, which is suitably used for packaging powdery or liquid agricultural chemicals and which is never broken due to pin holes and/or cracks even during transportation at a low temperature.

This object is achieved by means of the combination of the features defined in claim 1. Preferred embodiments of the composite film bag are defined in the subclaims.

In the composite film bag for packaging according to the present invention, the outer film permits the prevention of any breakage of the internal polyvinyl alcohol film even during transportation at a temperature of not more than the brittle temperature (or the glass transition temperature) of the polyvinyl alcohol film, more specifically not more than 0°C to -5°C. Moreover, upon practical use of the content of the package, the consumer can manually peel off the outer film to expose the internal polyvinyl alcohol film which is water-soluble. Accordingly, the polyvinyl alcohol film bag per se containing the powdery or liquid substances packed therein such as the agricultural chemicals can be introduced into water accommodated in a tank to dissolve or disperse the content therein.

In the following the invention is further illustrated by embodiments with reference to the enclosed figures.

Fig. 1 is a perspective view for illustrating the composite film bag for packaging according to the present invention which is put in practical use.

Fig. 2 is a cross sectional view showing an embodiment of the composite film bag for packaging according to the present invention.

Fig. 3 is a cross sectional view showing another embodiment of the composite film bag for packaging according to the present invention.

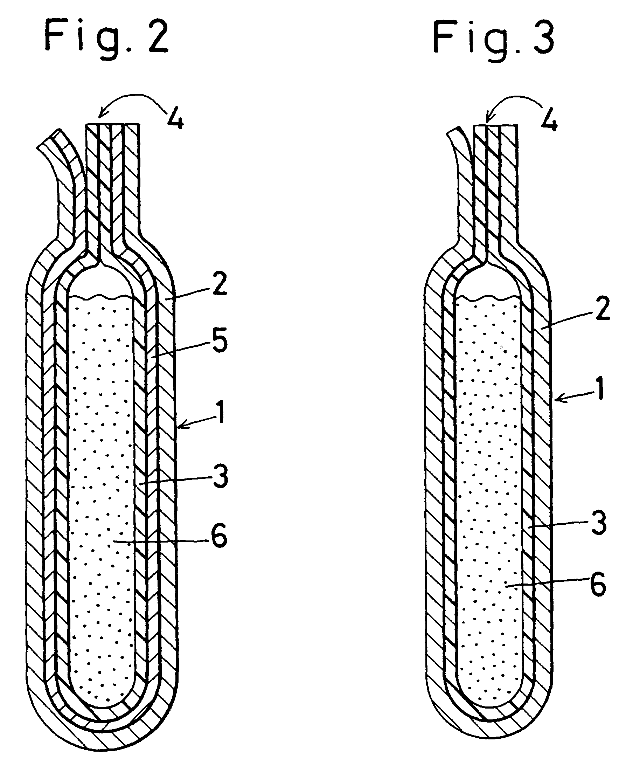

As seen from the cross sectional view shown in Fig. 2, a composite film bag 1 for packaging comprises an outer film layer 2 and an internal film layer 3 which are temporarily adhered to one another through the use of an adhesive 5 to such an extent that the former film 2 can easily be peeled off from the latter film 3. A water-insoluble film is used as a material for the outer film layer 2. A water-soluble polyvinyl alcohol film is used as a material for the internal film layer 3.

The water-insoluble film used as the outer film layer 2 desirably has a glass transition temperature of not more than -5 °C or a tensile strength, as determined according to the test defined by JIS Z 1702, of not less than 3 kg/mm². Specific examples of such films are polyethylene, unoriented polypropylene, biaxially oriented polypropylene, biaxially oriented polyester, aliphatic polyester, polyvinyl chloride, unoriented nylon, biaxially oriented nylon, cellophane, chitosan and chitosan/cellulose films as well as these films on which an aluminum is vapor-deposited or an aluminum foil is laminated. The thickness of the outer film layer generally ranges from 5 to 500 µm and preferably 10 to 200 µm. This is because, if it is less than 5 µm, the outer film layer cannot easily be peeled off from the internal film layer and a part thereof may sometimes be broken during peeling off, while if it exceeds 500 µm, the film cannot easily be formed into a bag and thus the use thereof is unfavorable from the economical viewpoint.

The water-soluble polyvinyl alcohol film used in the composite film bag as the internal film layer 3, is selected from, partially saponified polyvinyl acetate films and polyvinyl alcohol films modified with, maleic acid or itaconic acid. The partially saponified polyvinyl acetate films have a degree of saponification ranging from 70 to 98 mole% and the foregoing polymeric materials have a degree of polymerization ranging from 500 to 3000. If the degree of saponification is less than 70 mole% or more than 98 mole%, the water-solubility thereof is impaired. On the other hand, if the degree of polymerization is less than 500, the film is insufficient in strength, while it it exceeds 3000, the dissolution thereof in water requires a long time. For this reason, according to the invention the degree of saponification and polymerization should be limited to the range defined above. The thickness of the polyvinyl alcohol film ranges from 10 to 100 µm. This is because, if it is less than 10 µm, the resulting film never ensures proper strength, in particular, heat seal strength (resistance to heat-seal). On the other hand, if it exceeds 100 µm, a substantially long time period is required for complete dissolution thereof in water and thus the use thereof is unfavorable from the economical standpoint.

Examples of adhesive 5 for adhering the outer film 2 to the internal film 3 include solutions of adhesive resins such as polyurethanes, rubbers, amide resins, vinyl resins and acrylic resins in organic solvents or polyvinyl alcohol resins in water-containing organic solvents or an aqueous solvent In the composite film obtained by adhering the outer film 2 to the internal film 3 through the adhesive 5, the film 3 is weakly adhered to the film 2 and can correspondingly be easily peeled off from the latter.

The composite film obtained by adhering the outer film 2 to the internal film 3 is in general folded so that the outside of the folded composite film is constituted by the outer film 2 and then the peripheral portions thereof are heat-sealed. Thus, the water-soluble polyvinyl alcohol film as the internal film 3 is welded together to give a composite film bag for packaging.

The composite film bag 1 for packaging is in general used by introducing powdery or liquid substances (content 6) such as powdery agricultural chemicals, powdery medicines or powdery chemical agents into the bag 1 and then heat-sealing the opening to the bag 1. In Figs. 2 and 3, the reference numeral 4 represents the line along which the composite film is heat-sealed.

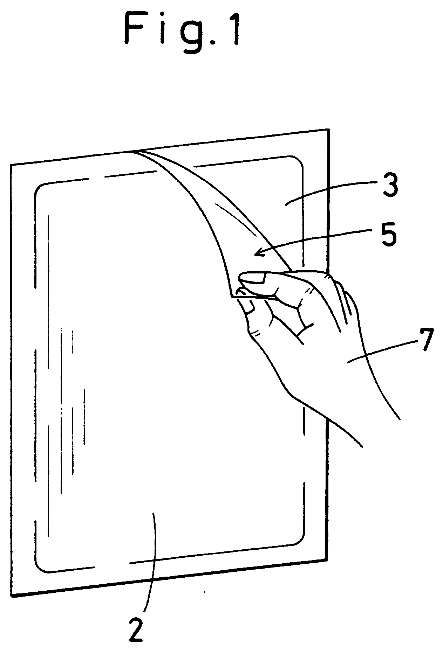

As will be seen from Fig. 1, the outer film 2 can be peeled off, by hand 7, from the composite film bag 1 for packaging in which the content 6 is packaged to thus expose the outer surface of the internal film 3. When the internal film per se, which is still in the form of a bag and contains the content 6, is then introduced into water, the internal film is first dissolved therein and thus the content 6 is then released from the bag and dissolved in water. Moreover, if the content 6 comprises a powdery dye or a powdery compost, the internal film 3, which is still in the form of a bag and contains the content 6, is placed at a place where it is used and the content 6 can be released therefrom by dissolving the polyvinyl alcohol film 3 through spraying water on the bag or through the action of rainwater.

Alternatively, as seen from Fig 3, the outer film 2 may directly be adhered to the internal film 3 without using any adhesive to give a bilayer film, i.e., a composite film bag 1 for packaging. The bilayer film of this type can be prepared by forming, in advance, one of the films required and then applying a solution of a polymer as a material for the other film onto the surface of the film previously formed.

In the composite film bag for packaging according to the present invention detailed above, the internal polyvinyl alcohol film is protected from any breakage thanks to the presence of the outer film having high resistance to low temperature conditions, even if in the course of the distribution thereof the bag is exposed to a temperature lower than the brittle point of the internal film.

The present invention will hereunder be described in more detail with reference to the following working Examples, but the present invention is by no means limited to these specific Examples.

### Example 1

A biaxially oriented polyester film (available from Teijin Ltd.) having a thickness of 25 µm was subjected to a corona discharge treatment and the corona-discharged surface thereof was laminated with a polyvinyl alcohol film (available from Aicello Chemical Co., Ltd. under the trade name of Solublon KA-40) having a thickness of 40 µm through an adhesive layer obtained from a polyvinyl methyl ether solution. This film was folded so that the outside of the folded composite film was constituted by the biaxially oriented polyester and the inside thereof was constituted by the polyvinyl alcohol layer, then the peripheral part thereof was heat-sealed to give a composite film bag for packaging having a longitudinal length of 15 cm and a width of 10 cm. These steps were repeated till 50 composite film bags were formed. An agricultural chemical agent (available from Nippon Ciba Geigy Co., Ltd. under the trade name of Ridomil) was introduced into these bags thus produced (100 g each) and the openings thereof were heat-sealed to give fifty sample bags packed with the agricultural chemical agent. They were put in a carton of corrugated board, then allowed to stand at -5°C for one day, the sample bags while they were accommodated in the carton were dropped on a concrete ground from a level of 1 m high at room temperature and then each bag was inspected for the presence of pinholes. As a result, it was found that any pinhole was not formed on every bags. Then the biaxially oriented polyester film as the outer layer of the bag containing the agricultural chemical agent was manually peeled off to thus expose the polyvinyl alcohol film as the internal layer thereof and the bag was introduced into a tank containing 10 ℓ of water to dissolve the polyvinyl alcohol layer and hence the content (agricultural chemical agent) of the bag. The bag was completely dissolved in water within one minute and the agricultural chemical agent contained therein was uniformly dispersed in water.

### Example 2

A 20% aqueous solution of a polyvinyl alcohol (PA-05 available from Shin-Etsu Chemical Co., Ltd.) to which 10 parts of glycerin had been added was applied, by a blade coater, onto the corona-discharged surface of a biaxially oriented polypropylene film (available from Tokyo Cellophane Co., Ltd.) which had a thickness of 25 µm and one side of which had been aluminum-deposited, so that the thickness of the coated layer of the solution was equal to 30 µm (weighed after drying). The resulting composite film was folded so that the outside of the folded composite film was constituted by the aluminum-deposited face of the polypropylene film and the inside thereof was constituted by the polyvinyl alcohol layer, then the same procedures used in Example 1 were repeated to give a composite film bag for packaging. Fifty sample bags were produced by repeating the same procedures used in Example 1. These bags were subjected to the dropping test which was carried out after allowing them to stand at -5°C for one day and it was found that any pinhole was not formed on every sample bags at all. In water-dissolution test performed after peeling off the outer layer, it was found that the polyvinyl alcohol layer of each sample bag was dissolved in water within one minute and did not interfere with the dispersion of the agricultural chemical agent in water.

### Example 3

A chitosan/cellulose film having a thickness of 40 µm was laminated with a polyvinyl alcohol film having a thickness of 40 µm (available from Aicello Chemical Co., Ltd. under the trade name of Solublon PH-40) using an acrylic emulsion as an adhesive. The resulting composite film was processed by repeating the same procedures used in Example 1 to give a composite film bag for packaging. Fifty sample bags were produced by repeating the same procedures used in Example 1 and these bags were subjected to a dropping test which was carried out after allowing them to stand at -5°C for one day. As a result, it was found that any pinhole was not formed on every sample bags at all. After peeling off the chitosan/cellulose film as the outer layer, each sample bag was introduced into water to inspect it for the dissolution in water and it was found that the polyvinyl alcohol layer of each sample bag was dissolved in water within one minute and that the agricultural chemical agent as the content thereof was uniformly dispersed in water.

### Example 4

A polyethylene film having a thickness of 80 µ one side of which had been processed for the improvement in the adhesion (Cold Seal available from Aicello Chemical Co., Ltd.) was laminated with a polyvinyl alcohol film (Solublon PH-50) having a thickness of 50 µm. The resulting laminate film was formed into a composite film bag for packaging by repeating the same procedures used in Example 1. The same procedures used in Example 1 were repeated till fifty sample bags were produced and the resulting bags were subjected to a dropping test which was carried out after allowing them to stand at -5°C for one day. As a result, it was found that any pinhole was not formed on every sample bags at all. After peeling off the outer Cold Seal layer by hand, each sample bag was subjected to a dissolution test and the polyvinyl alcohol layer was found to be dissolved in water within one minute and the agricultural chemical agent as the content thereof was found to be easily and uniformly dispersed in water.

### Comparative Example 1

Separately, fifty internal packaging bags were prepared by heat-sealing a polyvinyl alcohol film (Solublon KA-40) and fifty outer packaging bags were prepared from a laminate film of an aluminum vapor-deposited polyester film with a polyethylene film through heat-sealing. An agricultural chemical agent (Ridomil; 100 g each) was packed in each internal packaging bag, the opening thereof was heat-sealed, further put in each outer packaging bag and the opening of the outer bag was again heat-sealed to give fifty comparative sample bags. These sample bags were put in a carton of corrugated board and subjected to a dropping test similar to that carried out in Example 1. Then the sample bags were withdrawn from the carton, the internal bags of polyvinyl alcohol were inspected for the presence of pinholes and 46 bags out of the 50 sample bags examined were found to have pinholes. Each internal packaging bag containing the agricultural chemical agent was removed from the corresponding outer packaging bag and introduced into water. As a result, it was found that the agricultural chemical agent was uniformly dispersed in water within one minute.

## Claims

1. A composite film bag (1) for packaging comprising a composite film of a water-insoluble film (2) and a water-soluble polyvinyl alcohol film (3) which are formed into a bag so that the polyvinyl alcohol film (3) serves as an internal layer of the bag (1) and the water-insoluble film (2) serves as an outer layer thereof, wherein the water-insoluble film (2) and the water-soluble polyvinyl alcohol film (3) are coextensively adhered to one another to such an extent that the water-insoluble film (2) can easily be peeled off from the polyvinyl alcohol film (3), wherein the water-soluble polyvinyl alcohol film (3) is a polymer film having a degree of polymerization ranging from 500 to 3000, said film being selected from the group consisting of polyvinyl alcohol films modified with maleic acid, polyvinyl alcohol films modified with itaconic acid and partially saponified polyvinyl acetate films having a degree of saponification ranging from 70 to 98 mole%.

2. A composite film bag (1) according to claim 1, wherein, in the composite film, the water-insoluble film (2) is adhered to the water-soluble polyvinyl alcohol film (3) with an adhesive layer (5).

3. A composite film bag (1) according to claim 2, wherein the adhesive layer (5) is obtainable by applying a solution of an adhesive in an organic solvent, in a water-containing organic solvent or an aqueous solvent between the water-soluble polyvinyl alcohol film (3) and the water-insoluble film (2).

4. A composite film bag (1) according to claim 1, wherein, in the composite film, the water-insoluble film (2) is directly adhered to the water-soluble polyvinyl alcohol film (3).

## Patentansprüche

1. Verbundfolienbeutel (1) zum Verpacken, der eine Verbundfolie aus einer wasserunlöslichen Folie (2) und einer wasserlöslichen Polyvinylalkoholfolie (3) umfasst, die zu einem Beutel ausgebildet sind, so dass die Polyvinylalkoholfolie (3) als eine Innenschicht des Beutels (1) und die wasserunlösliche Folie (2) als deren äußere Schicht dient, wobei die wasserunlösliche Folie (2) und die wasserlösliche Polyvinylalkoholfolie (3) von gleicher Ausdehnung bis zu einem solchen Ausmaß aneinander gehaftet sind, dass die wasserunlösliche Folie (2) von der Polyvinylalkoholfolie (3) leicht abgeschält werden kann, wobei die wasserlösliche Polyvinylalkoholfolie (3) eine Polymerfolie mit einem Polymerisationsgrad sich erstreckend von 500 bis 3000 ist, die Folie aus der Gruppe bestehend aus mit Maleinsäure veränderte Polyvinylalkoholfolien, aus mit Itakonsäure veränderte Polyvinylalkoholfolien und aus teilweise verseifte Polyvinylacetatfolien mit einem Verseifungsgrad sich erstreckend von 70 bis 98 Molprozenten ausgewählt worden ist.

2. Verbundfolienbeutel (1) nach Anspruch 1, wobei in der Verbundfolie die wasserunlösliche Folie (2) mit einer Haftschicht (5) an der wasserlöslichen Polyvinylalkoholfolie (3) angehaftet ist.

3. Verbundfolienbeutel (1) nach Anspruch 2, wobei die Haftschicht (5) durch Anwendung einer Lösung eines Haftmittels in einem organischen Lösungsmittel, einem wasserhaltigen organischen Lösungsmittel oder einem wässrigen Lösungsmittel zwischen der wasserlöslichen Polyvinylalkoholfolie (3) und der wasserunlöslichen Folie (2), erhältlich ist.

4. Verbundfolienbeutel (1) nach Anspruch 1, wobei in der Verbundfolie die wasserunlösliche Folie (2) unmittelbar an der wasserlöslichen Polyvinylalkoholfolie (3) angehaftet ist.

## Revendications

1. Sac (1) en film composite destiné à l'emballage, comprenant un film composite formé d'un film insoluble dans l'eau (2) et d'un film de poly(alcool de vinyle) soluble dans l'eau (3) qui sont façonnés en un sac pour que le film de poly(alcool de vinyle) (3) serve de couche intérieure du sac (1) et que le film insoluble dans l'eau (2) serve de couche extérieure de ce dernier, dans lequel le film insoluble dans l'eau (2) et le film de poly(alcool de vinyle) soluble dans l'eau (3) adhèrent l'un à l'autre selon la même étendue de telle manière que l'on puisse enlever facilement par pelage le film insoluble dans l'eau (2) du film de poly(alcool de vinyle) (3), et dans lequel le film de poly(alcool de vinyle) soluble dans l'eau (3) est un film de polymère présentant un degré de polymérisation se situant dans l'intervalle allant de 500 à 3000, ledit film étant choisi dans l'ensemble constitué par les films de poly(alcool de vinyle) modifié avec l'acide maléique, les films de poly(alcool de vinyle) modifié avec l'acide itaconique et les films de poly(acétate de vinyle) partiellement saponifié présentant un degré de saponification se situant dans l'intervalle allant de 70 à 98 % en moles.

2. Sac (1) en film composite selon la revendication 1, dans lequel, dans le film composite, le film insoluble dans l'eau (2) adhère au film de poly(alcool de vinyle) soluble dans l'eau (3) par l'intermédiaire d'une couche adhésive (5).

3. Sac (1) en film composite selon la revendication 2, dans lequel on peut obtenir la couche adhésive (5) en appliquant une solution d'un adhésif dans un solvant organique, dans un solvant organique contenant de l'eau ou dans un solvant aqueux, entre le film de poly(alcool de vinyle) soluble dans l'eau (3) et le film insoluble dans l'eau (2).

4. Sac (1) en film composite selon la revendication 1, dans lequel, dans le film composite, le film insoluble dans l'eau (2) adhère directement au film de poly(alcool de vinyle) soluble dans l'eau (3).
